# EUROPÄISCHE PATENTSCHRIFT

(11) **EP 3 789 213 B1**
(45) Veröffentlichungstag und Bekanntmachung des Hinweises auf die Patenterteilung: **08.03.2023**
(21) Anmeldenummer: 20189639.6
(22) Anmeldetag: 05.08.2020
(51) Int. Cl.: B60C 11/13, B60C 11/03

(54) **FAHRZEUGLUFTREIFEN**
PNEUMATIC TYRE
PNEUMATIQUE DE VÉHICULE

(30) Priorität: 03.09.2019 DE 102019213251
(43) Veröffentlichungstag der Anmeldung: 10.03.2021
(73) Patentinhaber: Continental Reifen Deutschland GmbH, 30165 Hannover (DE)
(72) Erfinder: Brockmann, Jürgen, 30419 Hannover (DE); Heinhaupt, Torsten, 30419 Hannover (DE)
(74) Vertreter: Continental Corporation

(56) Entgegenhaltungen:
- DE-A1-102005 052 604
- JP-A- H11 263 104
- JP-A- 2000 135 905
- JP-A- 2002 347 412
- JP-A- 2011 046 231
- US-A- 6 138 728

## Beschreibung

Die Erfindung betrifft einen Fahrzeugluftreifen mit einem Laufstreifen, welcher durch zumindest eine Umfangsrille und in diese einmündende Rillen, welche jeweils einen Rillengrund und Rillenflanken aufweisen, gebildete Profilpositive aufweist, welche mit spitzwinkeligen Eckbereichen versehen sind, an welchen die Umfangsrille und die einmündenden Rillen miteinander einen Winkel von 20° bis 45° einschließen und welche jeweils von einem auf den Rillengründen angeordneten Vorsprung bugfenderartig umlaufen sind, dessen in radialer Richtung ermittelte größte Höhe 30% bis 100% der Profiltiefe beträgt.

Ein derartiger Fahrzeugluftreifen ist beispielsweise aus der DE 10 2007 059 292 A1 bekannt. Der Fahrzeugluftreifen weist einen Laufstreifen mit einer zentralen Umfangsrille auf, in welche Quer- oder Schrägrillen einmünden, wobei an der Umfangsrille spitzwinkelige Eckbereiche von Profilpositiven vorliegen. An den spitzwinkeligen Eckbereichen schließen die Quer- bzw. Schrägrillen mit der Umfangsrille einen Winkel von 30° bis 60°, insbesondere von 45°, ein. Ferner ist an den spitzwinkeligen Eckbereichen jeweils ein bugfenderartiger Vorsprung ausgebildet, welcher eine Höhe von 30% bis 60% der Profiltiefe und eine maximale Breite von 1,0 mm bis 1,5 mm aufweist. Die Vorsprünge bewirken eine Umlenkung des in der Umfangsrille innerhalb der Bodenaufstandsfläche auf nasser Fahrbahn durchströmenden Gemisches aus Wasser und Luft, wodurch Schwankungen in der Strömungsgeschwindigkeit verringert und ein Pulsieren der Wasserströmung weitgehend vermieden werden sollen.

Die DE 10 2005 052 604 A1 offenbart einen Fahrzeugluftreifen mit einem Laufstreifen, welcher durch Umfangsrillen und weitere Rillen gebildete Profilblöcke aufweist, welche bei einer Umfangsrille von den Flankenflächen der Rillen gebildete spitzwinkelige Eckbereiche besitzt. An den spitzwinkligen Eckbereichen begrenzen die beiden Flankenflächen jeweils einen in die Umfangsrille hineinragenden Vorsprung mit einer zwischen den Flankenflächen verlaufenden, abgerundeten kantenfreien Verbindungsfläche. Der Rundungsradius der Verbindungsfläche und die Höhe des Vorsprunges verringern sich von der Außenfläche der Profilblöcke kontinuierlich in Richtung zum Rillengrund. Derart ausgeführte Vorsprünge bewirken ein verwirbelungsarmes Teilen von in der Umfangsrille beim Abrollen des Reifens auf nassem Untergrund fließendem Wasser.

Aus der JP H1 1 263 104 A ist ein Fahrzeugluftreifen mit einem Laufstreifen mit vier Profilblockreihen, welche durch Umfangsrillen voneinander getrennt sind, bekannt. Jede Profilblockreihe weist Profilblöcke auf, welche durch unter einem spitzen Winkel zur axialen Richtung verlaufende Querrillen voneinander getrennt sind, sodass jeder Profilblock zwei einander diagonal gegenüberliegende spitzwinkelige Eckbereiche und zwei einander diagonal gegenüberliegende stumpfwinkeligen Eckbereiche aufweist. Jeder spitzwinkelige Eckbereich ist durch eine durchgehend gekrümmte, im Wesentlichen dreieckige Eckfläche abgerundet. Die getroffenen Maßnahmen sollen unter Aufrechterhaltung einer hohen Blocksteifigkeit eine guter Wasserdrainage ermöglichen.

Die JP 2002 347 412 A offenbart einen Fahrzugluftreifen mit einem laufrichtungsgebunden ausgeführten Laufstreifen, welcher V-förmig über die Laufstreifenbreite verlaufende Schrägrillen, eine entlang der Reifenäquatorialebene verlaufende Umfangsrille und zwischen den Schrägrillen verlaufende kurze Nuten aufweist. Die an die Umfangsrille angrenzenden Profilblöcke weisen an der Umfangsrille spitzwinkelige Blockeckbereiche auf, welche durch eine Eckfase abgeschrägt sind. Die Eckfasen sollen einen ungleichmäßigen Abrieb an den spitzwinkelige Blockeckbereichen verhindern und ein geringes Abrollgeräusch ermöglichen.

Fahrzeugluftreifen der eingangs genannten Art haben sich im Hinblick auf das Entwässerungsverhalten des Laufstreifens des Reifens als vorteilhaft erwiesen. Allerdings ist an den spitzwinkeligen Eckbereichen die Quer- und Umfangsteifigkeit der Profilblöcke gegenüber den sonstigen Bereichen der Profilblöcke geringer, sodass sich diese Bereiche unter Belastung leichter verbiegen und, bedingt durch den dadurch beim Abrollen erfolgenden geringeren Bodenkontakt, langsamer bzw. weniger stark abreiben. Die bislang bekannten, an diesen Stellen ausgebildeten Vorsprünge konnten die geringere Steifigkeit der spitzwinkeligen Eckbereiche nur unzureichend ausgleichen.

Der Erfindung liegt daher die Aufgabe zugrunde, einen Fahrzeugluftreifen der eingangs genannten Art derart zu gestalten, dass die Profilpositive inklusive ihrer spitzwinkeligen Eckbereiche und unter Bedachtnahme auf eine strömungsoptimierte Gestaltung wesentlich gleichmäßiger abreiben.

Gelöst wird die gestellte Aufgabe erfindungsgemäß dadurch, dass der Vorsprung eine in radialer Richtung verlaufende Symmetrieebene aufweist, welche den Winkel zwischen der Umfangsrille und der einmündenden Rille halbiert, wobei der Vorsprung an der Schnittlinie der Symmetrieebene mit dem spitzwinkeligen Eckbereich seine größte Höhe besitzt und durch eine einzige, stetig gekrümmte Fläche begrenzt ist, welche ausgehend von der Stelle mit der größten Höhe in Richtung zu den Rillengründen abfällt, wobei am spitzwinkeligen Eckbereich eine von der Laufstreifenperipherie ausgehende, dreieckige Eckfase ausgebildet ist, welche bis zum Vorsprung reicht und zur radialen Richtung unter einem konstanten Winkel von 20° bis 45° verläuft.

Die Vorsprünge an den spitzwinkligen Eckbereichen sind daher derart gestaltet, dass sie die spitzwinkligen Eckbereiche optimal stabilisieren und eine gleichmäßige Steifigkeit der Profilpositive bewirken, sodass die Profilpositive auch gleichmäßig abreiben. Die einzige, insgesamt gerundete, den jeweiligen Vorsprung begrenzende, äußere Fläche ist frei von scharfkantigen Übergängen, sodass die Vorsprünge auf besonders wirksame Weise strömungsoptimiert gestaltet sind.

Gemäß einer bevorzugten Ausführung geht die gerundete Fläche, welche den Vorsprung begrenzt, knickfrei in die Rillenflanken der Umfangsrille und der einmündenden Rille über, sodass der Vorsprung strömungsoptimiert gestaltet ist.

Zur Vermeidung von Verwirbelungen von Wasser nahe des Rillengrundes ist es günstig, wenn die gerundete Fläche, welche den Vorsprung begrenzt, in der Symmetrieebene des Vorsprunges betrachtet, knickfrei am Rillengrund der Rillen ausläuft.

Ferner hat es sich als vorteilhaft herausgestellt, wenn die gerundete Fläche, welche den Vorsprung begrenzt, in der Symmetrieebene des Vorsprunges durchgehend nach innen gewölbt ist. Durch diese Maßnahme lässt sich vor allem eine verwirbelungsarme Teilung des Wasserstromes an der Rillenkreuzung erzielen.

Eine weitere bevorzugte Ausführung ist dadurch gekennzeichnet, dass eine gerade Linie, welche in der Symmetrieebene die Stelle mit der größten Höhe mit dem Ende des Vorsprunges am Rillengrund verbindet, zur radialen Richtung unter einem Winkel von 20° bis 45°, insbesondere von 25° bis 35°, verläuft. Die abstützende Wirkung des Vorsprunges lässt sich durch diese Maßnahme weiter verbessern, wodurch insbesondere auch das Abriebverhalten weiter vergleichmäßigt ist.

Gemäß einer weiteren bevorzugten Ausführung beträgt der konstante Winkel, unter welchem die dreieckige Eckfase zur radialen Richtung verläuft, bis zu 40°, bevorzugt von 25° bis 35°. Eine solche Eckfase wirkt einem Verformen der spitzwinkeligen Eckbereiche unter Belastung zusätzlich entgegen, sie begünstigt daher einen gleichmäßigen Abrieb.

Die Wirkung der Eckfase ist besonders vorteilhaft, wenn diese an der Laufstreifenperipherie eine gerade Kante aufweist, welche, in Draufsicht betrachtet, senkrecht zur Symmetrieebene des Vorsprunges verläuft.

Gemäß einer weiteren bevorzugten Ausführung beträgt die größte Höhe des Vorsprunges bis zu 75%, insbesondere bis zu 60%, und besonders bevorzugt bis zu 50% der Profiltiefe. Der Vorsprung stützt auf diese Weise den spitzwinkeligen Eckbereich besonders vorteilhaft ab.

Bevorzugt ist der Vorsprung nasenförmig ausgebildet und, in Draufsicht betrachtet, in Richtung der Symmetrieebene langgestreckt.

Ein langgestreckter Vorsprung lässt sich durch weitere bevorzugte Ausgestaltungen im Hinblick auf seine abstützende Wirkung weiter verbessern. Bei einer dieser Ausgestaltungen weist der Vorsprung, ermittelt senkrecht zur Symmetrieebene, eine maximale Breite von 80% bis 120%, insbesondere von 90% bis 105%, seiner in Draufsicht in der Symmetrieebene ermittelten Länge auf. Gemäß einer weiteren Ausgestaltung weist, der Vorsprung eine in Draufsicht parallel zu seiner Symmetrieebene ermittelte maximale Länge auf, welche 170% bis 240%, insbesondere von 195% bis 215%, seiner in Draufsicht in der Symmetrieebene ermittelten Länge beträgt. Dabei weist Vorsprung, ermittelt in seiner Symmetrieebene, vorzugsweise eine Länge von 1,5 mm bis 5,0 mm, insbesondere von bis zu 3,0 mm, auf. Die Länge ist insbesondere derart gewählt, dass der Vorsprung in der Symmetrieebene zum Schnittpunkt der Mittellinie der Umfangsrille mit der Mittellinie der am zugehörigen spitzwinkligen Eckbereich einmündenden Rille einen Abstand von 1,0 mm bis 4,0mm, insbesondere von mindestens 2,0 mm, aufweist.

Gemäß einer weiteren bevorzugten Ausführung weist der Fahrzeugluftreifen einen laufrichtungsgebunden ausgeführten Laufstreifen mit zumindest einer insbesondere zentralen Umfangsrille auf, an welcher die Profilpositive die spitzwinkelige Eckbereiche mit Vorsprüngen aufweisen, wobei die Profilpositive beim Abrollen des Reifens bei Vorwärtsfahrt über ihre spitzwinkeligen Eckbereiche in den Untergrund eintreten.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen Ausschnitt eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 eine Ansicht gemäß der in Fig. 2 durch den Pfeil S₃ angedeuteten Sichtrichtung,
Fig. 4 eine Ansicht gemäß der in Fig. 2 durch den Pfeil S₄ angedeuteten Sichtrichtung,
Fig. 5 einen Schnitt entlang der Linie V-V der Fig. 2 und
Fig. 6 einen Schnitt entlang der Linie VI-VI der Fig. 2.

Gemäß der Erfindung ausgeführte Fahrzeugluftreifen sind insbesondere Reifen in Radialbauart für Personenkraftwagen, Vans oder Light-Trucks.

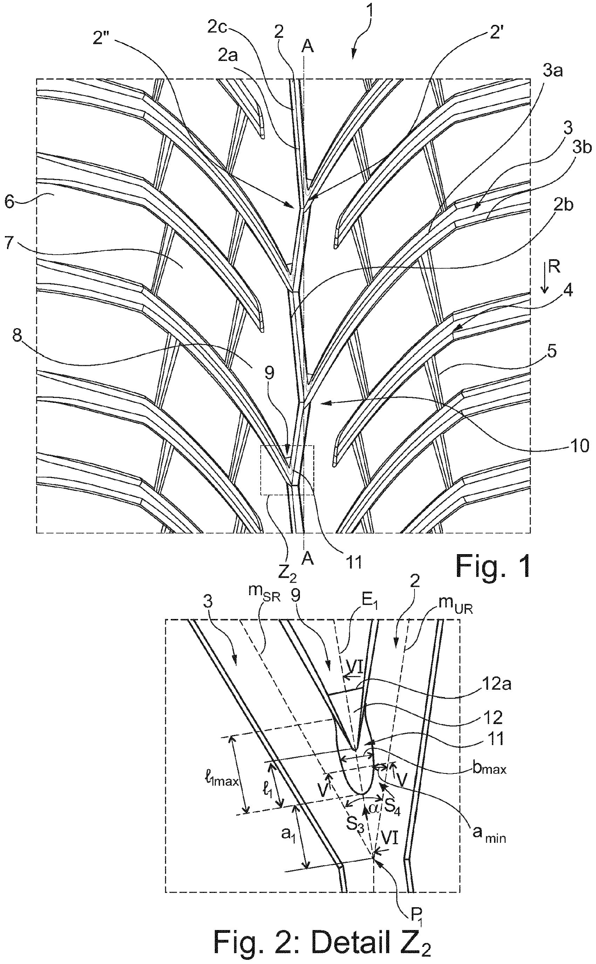

Fig. 1 zeigt eine Draufsicht auf einen Laufstreifen 1 eines Fahrzeugluftreifens, wobei die Äquatorialebene des Reifens durch eine Linie A-A gekennzeichnet ist. Der Laufstreifen 1 weist eine laufrichtungsgebundene Profilierung auf und ist derart am Fahrzeug zu montieren, dass er die durch den Pfeil R angedeutete Abrollrichtung bei Vorwärtsfahrt aufweist.

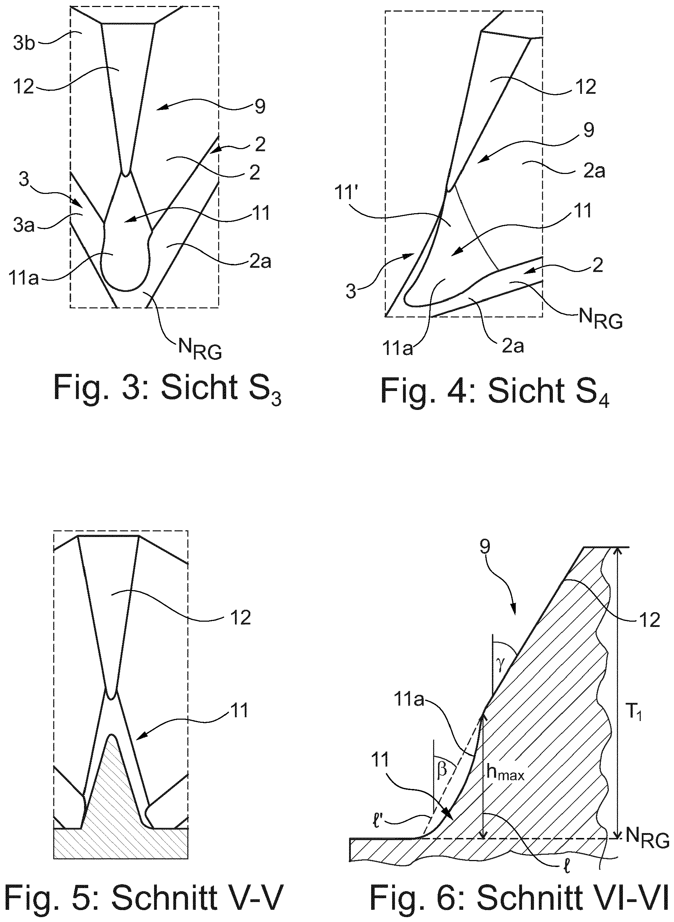

Der Laufstreifen 1 ist mit einer entlang der Äquatorialebene (Linie A-A) verlaufenden zentralen Umfangsrille 2 sowie mit über die Laufstreifenbreite V- förmig zueinander verlaufenden Schrägrillen 3, 4 versehen. Die zentrale Umfangsrille 2 und die Schrägrillen 3, 4 bilden die Haupt(entwässerungs)rillen des Laufstreifens, wobei die Schrägrillen 3, 4 und die Umfangsrille 2 auf die jeweils vorgesehene Profiltiefe T₁ (Fig. 6) von üblicherweise 6,5 mm bis 10,0 mm ausgeführt sind. Die Tiefe der Schrägrillen 3, 4 verringert sich außerhalb der Bodenaufstandsfläche in an sich bekannter Weise in Richtung zu den Laufstreifenrändern.

Die zentrale Umfangsrille 2 weist einen Rillengrund 2a und Rillenflanken 2b auf, verläuft beim gezeigten Ausführungsbeispiel in Draufsicht zickzack-förmig und setzt sich aus Rillenabschnitten 2c zusammen, welche zur Umfangsrichtung unter einem Winkel von 3° bis 15° verlaufen. Am gegenseitigen Anschlussbereich der Rillenabschnitte 2c weist die Umfangsrille 2 jeweils einen Rillenknick mit einer Knickaußenseite 2` und einer Knickinnenseite 2" auf.

In jeder Laufstreifenhälfte folgt in Umfangsrichtung abwechselnd eine Schrägrille 3 auf eine Schrägrille 4, wobei die Schrägrillen 3, 4 in jeder Laufstreifenhälfte in Draufsicht parallel zueinander verlaufen. Die Schrägrillen 3 münden an den Knickaußenseiten 2` in die Umfangsrille 2 ein, weisen einen Rillengrund 3a und Rillenflanken 3b auf und werden nachfolgend auch als einmündende Schrägrillen 3 bezeichnet. Da sowohl die Umfangsrille 2 als auch die einmündenden Schrägrillen 3 auf Profiltiefe T₁ ausgeführt sind, weisen die Umfangsrille 2 und die Schrägrillen 3 ein einheitliches, auf Profiltiefe T₁ verlaufendes Rillengrundniveau N_{RG} (Fig. 3, Fig. 4, Fig. 6) auf. Die Schrägrillen 4 enden vor der Äquatorialebene (Linie A-A) und verlaufen jeweils in Richtung zu einer Knickinnenseite 2" der Umfangsrille 2, sodass sich die Knickinnenseiten 2" im Wesentlichen in Verlängerung der Schrägrillen 4 befinden. Ferner verlaufen in jeder Laufstreifenhälfte zwischen in Umfangsrichtung benachbarten Schrägrillen 3, 4 zwei Rillen 5, welche bezüglich der Umfangsrichtung gegensinnig zu den Schrägrillen 3, 4 geneigt sind.

Die beschriebene Profilierung verleiht dem Laufstreifen 1 in jeder Laufstreifenhälfte schulterseitige Profilblöcke 6, von welchen lediglich Teilbereiche gezeigt sind, sowie mittlere Profilblöcke 7 und 8. Die mittleren Profilblöcke 8 liegen an der zentralen Umfangsrille 2, wobei in jeden Profilblock 8 ein Endabschnitt einer vor der zentralen Umfangsrille 2 endenden Schrägrille 4 hineinverläuft, sodass die Profilblöcke 8 in Draufsicht - je nach Laufstreifenhälfte - eine C-artige bzw. gespiegelt C-artige Gestalt aufweisen.

Jeder Profilblock 8 weist an der zentralen Umfangsrille 2 an den Einmündungen der an ihn in Umfangsrichtung angrenzenden Schrägrillen 3 einen in Draufsicht spitzwinkeligen Eckbereich 9 und einen in Draufsicht stumpfwinkeligen Eckbereich 10 auf, wobei beim Abrollen des Reifens bei Vorwärtsfahrt der spitzwinkelige Eckbereich 9 vor dem stumpfwinkeligen Eckbereich 10 in den Untergrund eintritt.

Fig. 2 zeigt einen vergrößerten Ausschnitt im Bereich eines spitzwinkeligen Eckbereiches 9, wobei ein Abschnitt der Mittellinie m_{SR} der gezeigten einmündenden Schrägrille 3 und ein Abschnitt der Mittellinie m_{UR} der Umfangsrille 2 strichliert eingezeichnet sind. Die Mittellinien m_{SR}, m_{UR} folgen in bekannter Weise dem jeweiligen Rillenverlauf, ihr Schnittpunkt P₁ ist ebenfalls gekennzeichnet. Die einmündende Schrägrille 3 schließt mit der zentralen Umfangsrille 1 zum spitzwinkeligen Eckbereich 9 - ermittelt zwischen ihren Mittellinien m_{SR}, m_{UR} - einen Winkel α von 20° bis 45°, insbesondere von 28° bis 43°, ein. Sind gebogen verlaufende Schrägrillen 3 vorgesehen, ist der Winkel α gegenüber einer an die Mittellinie m_{SR} der jeweiligen Schrägrille 3 angelegten, durch den Schnittpunkt P₁ verlaufenden Tangente ermittelt.

Wie insbesondere Fig. 1 bis Fig. 4 zeigen, ist an jedem spitzwinkeligen Eckbereich 9 ein sowohl am Rillengrund 2a der Umfangsrille 2 als auch am Rillengrund 3a der jeweiligen einmündenden Schrägrille 3 aufsitzender, den spitzwinkeligen Eckbereich 9 bugfenderartig umlaufender, nasenförmiger Vorsprung 11 ausgebildet.

Gemäß Fig. 2 weist der Vorsprung 11 eine in radialer Richtung verlaufende, den Winkel α halbierende, in Fig. 2 mit der Schnittlinie VI-VI zusammenfallende Symmetrieebene E₁ auf. Die Symmetrieebene E₁ ist von einer in radialer Richtung verlaufenden Geraden und einer in Draufsicht den Winkel α halbierenden Geraden aufgespannt. Der Vorsprung 11 ist, in Draufsicht betrachtet, in Erstreckungsrichtung der Symmetrieebene E₁ langgestreckt, weist in der Symmetrieebene E₁ eine Länge l₁ von 1,5 mm bis 5,0 mm, insbesondere von bis zu 3,0 mm, parallel zur Symmetrieebene E₁ ermittelte eine maximale Länge l₁ₘₐₓ von 170% bis 240%, insbesondere von 195% bis 215%, der Länge l₁ und senkrecht zur Symmetrieebene E₁ ermittelt an seiner breitesten Stelle eine maximale Breite bₘₐₓ von 80% bis 120%, insbesondere von 90% bis 105%, der Länge l₁ auf. Die breiteste Stelle befindet sich, in Draufsicht betrachtet, im mittleren Bereich des Vorsprunges 11. Besonders bevorzugter Weise sind die Abmessungen des Vorsprunges 11 derart aufeinander abgestimmt, dass dieser zu den Mittellinien m_{UR} und m_{SR} einen Mindestabstand aₘᵢₙ von 0,1 mm bis 1,5 mm, insbesondere von mindestens 0,5 mm, sowie ermittelt in der Symmetrieebene E₁ zum bereits erwähnten Schnittpunkt P₁ einen Abstand a₁ von 1,0 mm bis 4,0 mm, insbesondere von mindestens 2,0 mm, aufweist.

Gemäß Fig. 6 ist der Vorsprung 11, im in der Symmetrieebene E₁ liegenden Querschnitt betrachtet, rechtwinkelig-dreieckförmig ausgeführt und gemäß Fig. 5, im senkrecht zur Symmetrieebene E₁ ausgerichteten, im Bereich außerhalb des spitzwinkligen Eckbereiches 9 verlaufenden Querschnitt betrachtet, gleichschenkelig-dreieckförmig gestaltet. Wie Fig. 6 ferner zeigt, weist der Vorsprung 11 in der Symmetrieebene E₁ (vergleiche Fig. 2) an der in radialer Richtung verlaufenden Schnittlinie 1 der Symmetrieebene E₁ mit dem spitzwinkeligen Eckbereich 9 bzw. dem Profilblock 8 gegenüber dem Rillengrundniveau N_{RG} in radialer Richtung seine größte Höhe hₘₐₓ auf, welche beim gezeigten Ausführungsbeispiel zirka 40% der Profiltiefe T₁ beträgt.

Wie Fig. 3 und Fig. 4 zeigen, ist der Vorsprung 11 von einer einzigen, gerundeten, daher in ihrem Inneren von Kanten freien Fläche 11a begrenzt, welche an der jeweiligen Rillenflanke 2b der Umfangsrille 2 und der jeweiligen Rillenflanke 3b der entsprechenden, einmündenden Schrägrille 3 knickfrei ausläuft. Die Fläche 11a fällt ausgehend von der Stelle mit der größten Höhe hₘₐₓ auf eine die Höhe des Vorsprunges 11 verringernde Weise in Richtung zu den Rillengründen 2a, 3a bzw. zum Rillengrundniveau N_{RG} ab. Wie Fig. 2 und Fig. 6 zeigen, ist die Fläche 11a, betrachtet in der Symmetrieebene E₁, derart durchgehend kreisbogenförmig gekrümmt, dass sie ausgehend von ihren Enden zu ihrer Mitte - bezogen auf den Vorsprung 11 - nach innen gewölbt ist und knickfrei in das Rillengrundniveau N_{RG} bzw. die Rillengründe 2a, 3a übergeht. Betrachtet in der Symmetrieebene E₁ ist die Fläche 11a - bezogen auf eine ihre Enden verbindende Linie 1` - zur radialen Richtung unter einem Winkel β von 20° bis 45°, insbesondere von 25° bis 35°, geneigt. Der Vorsprung 11 weist daher einen nach innen gewölbten Nasenrücken 11' auf (Fig. 4). Ferner weist der Vorsprung 11, betrachtet in parallel zur Laufstreifenperipherie ausgerichteten Schnittebenen, eine Querschnittfläche mit einem sich ausgehend vom Rillengrundniveau N_{RG} in radialer Richtung kontinuierlich verringernden Flächeninhalt auf (Fig. 3, Fig. 4). Diese Schnittebenen sind senkrecht zur erwähnten Symmetrieebene E₁ ausgerichtet.

Wie Fig. 2 bis Fig. 5 ferner zeigen, ist beim gezeigten Ausführungsbeispiel jeder spitzwinkelige Eckbereich 9 mit einer von der Laufstreifenperipherie ausgehenden, bis zum jeweiligen nasenförmigen Vorsprung 11 reichenden, gleichschenkelig dreieckigen Eckfase 12 versehen. Die Eckfase 12 ist eine ebene Fläche, welche gemäß Fig. 6, im in der Symmetrieebene E₁ liegenden Querschnitt betrachtet, zur radialen Richtung unter einem Winkel γ von 20° bis 45°, insbesondere von bis zu 40°, besonders bevorzugt von 25° bis 35°, verläuft und an der Laufstreifenperipherie durch eine zwischen der jeweiligen einmündenden Schrägrille 3 und der Umfangsrille 2 gerade verlaufenden Kante 12a (Fig. 2) begrenzt ist, welche senkrecht zur Symmetrieebene E₁ verläuft. Der Winkel γ ist vorzugsweise um bis zu 15°, insbesondere um bis zu 5°, größer als der erwähnte Winkel β der Fläche 11a. Die Eckfase 12 wird ausgehend von der Laufstreifenperipherie ins radial Innere kontinuierlich schmäler.

Die Erfindung ist auf die beschriebene Ausführungsvariante nicht beschränkt.

Die gegenüber dem Rillengrundniveau N_{RG} in radialer Richtung ermittelte größte Höhe hₘₐₓ der Vorsprünge 11 beträgt 30% bis 100%, insbesondere bis zu 75%, vorzugsweise bis zu 60%, und besonders bevorzugt bis zu 50% der Profiltiefe T₁. Die Vorsprünge können auch an spitzwinkligen Eckbereichen von etwa sacknutartig mit Rillen strukturierten Profilrippen oder dergleichen ausgebildeten sein. Die Profilierung des Laufstreifens kann auch nicht laufrichtungsgebunden ausgeführt sein.

### Bezugszeichenliste

- 1: Laufstreifen
- 2: zentrale Umfangsrille
- 2a: Rillengrund
- 2b: Rillenflanke
- 2c: Rillenabschnitt
- 2': Knickaußenseite
- 2": Knickinnenseite
- 3: Schrägrille
- 3a: Rillengrund
- 3b: Rillenflanke
- 4: Schrägrille
- 5: Rille
- 6: schulterseitiger Profilblock
- 7: mittlerer Profilblock
- 8: mittlerer Profilblock
- 9: spitzwinkeliger Eckbereich
- 10: stumpfwinkeliger Eckbereich
- 11: Vorsprung
- 11a: Fläche
- 11': Nasenrücken
- 12: Eckfase
- 12a: Kante
- A-A: Linie (Äquatorialebene)
- aₘᵢₙ: Mindestab stand
- a₁: Abstand
- bₘₐₓ: maximale Breite
- E₁: Symmetrieebene
- hₘₐₓ: größte Höhe
- l: Schnittlinie
- l': Linie
- l₁: Länge
- l₁ₘₐₓ: maximale Länge
- m_{SR}, m_{UR}: Mittellinie
- N_{RG}: Rillengrundniveau
- P₁: Schnittpunkt
- R: Pfeil (Abrollrichtung)
- S₃, S₄: Pfeil (Sichtrichtung)
- T₁: Profiltiefe
- Z₂: Detail
- α, β, γ: Winkel

## Patentansprüche

1. Fahrzeugluftreifen mit einem Laufstreifen (1), welcher durch zumindest eine Umfangsrille (2) und in diese einmündende Rillen (3), welche jeweils einen Rillengrund (2a, 3a) und Rillenflanken (2b, 3b) aufweisen, gebildete Profilpositive (6, 7, 8) aufweist, welche mit spitzwinkeligen Eckbereichen (9) versehen sind, an welchen die Umfangsrille (2) und die einmündenden Rillen (3) miteinander einen Winkel (α) von 20° bis 45° einschließen und welche jeweils von einem auf den Rillengründen (2a, 3a) angeordneten Vorsprung (11) bugfenderartig umlaufen sind, dessen in radialer Richtung ermittelte größte Höhe (hₘₐₓ) 30% bis 100% der Profiltiefe (T₁) beträgt,
**dadurch gekennzeichnet,**
**dass** der Vorsprung (11) eine in radialer Richtung verlaufende Symmetrieebene (E₁) aufweist, welche den Winkel (α) zwischen der Umfangsrille (2) und der einmündenden Rille (3) halbiert, wobei der Vorsprung (11) an der Schnittlinie (l) der Symmetrieebene (E₁) mit dem spitzwinkeligen Eckbereich (9) seine größte Höhe (hₘₐₓ) besitzt und durch eine einzige, stetig gekrümmte Fläche (11a) begrenzt ist, welche ausgehend von der Stelle mit der größten Höhe (hₘₐₓ) in Richtung zu den Rillengründen (2a, 3a) abfällt, wobei am spitzwinkeligen Eckbereich (9) eine von der Laufstreifenperipherie ausgehende, dreieckige Eckfase (12) ausgebildet ist, welche bis zum Vorsprung (11) reicht und zur radialen Richtung unter einem konstanten Winkel (γ) von 20° bis 45° verläuft.

2. Fahrzeugluftreifen nach Anspruch 1, **dadurch gekennzeichnet, dass** die gerundete Fläche (11a), welche den Vorsprung (11) begrenzt, knickfrei in die Rillenflanken (2b, 3b) der Umfangsrille (2) und der einmündenden Rille (3) übergeht.

3. Fahrzeugluftreifen nach Anspruch 1 oder 2, **dadurch gekennzeichnet, dass** die gerundete Fläche (11a), welche den Vorsprung (11) begrenzt, in der Symmetrieebene (E₁) des Vorsprunges (11) betrachtet, knickfrei am Rillengrund (2b, 3b) der Rillen (2, 3) ausläuft.

4. Fahrzeugluftreifen nach einem der Ansprüche 1 bis 3, **dadurch gekennzeichnet, dass** die gerundete Fläche (11a), welche den Vorsprung (11) begrenzt, in der Symmetrieebene (E₁) des Vorsprunges (11) durchgehend nach innen gewölbt ist.

5. Fahrzeugluftreifen nach einem der Ansprüche 1 bis 4, **dadurch gekennzeichnet, dass** eine gerade Linie (l'), welche in der Symmetrieebene (E₁) die Stelle mit der größten Höhe (hₘₐₓ) mit dem Ende des Vorsprunges (11) am Rillengrund (2a, 3a) verbindet, zur radialen Richtung unter einem Winkel (β) von 20° bis 45°, insbesondere von 25° bis 35°, verläuft.

6. Fahrzeugluftreifen nach einem der Ansprüche 1 bis 5, **dadurch gekennzeichnet, dass** der konstante Winkel (γ), unter welchem die dreieckige Eckfase (12) zur radialen Richtung verläuft, bis zu 40°, bevorzugt von 25° bis 35°, beträgt.

7. Fahrzeugluftreifen nach einem der Ansprüche 1 bis 6, **dadurch gekennzeichnet, dass** die Eckfase (12) an der Laufstreifenperipherie eine gerade Kante (12a) aufweist, welche, in Draufsicht betrachtet, senkrecht zur Symmetrieebene (E₁) des Vorsprunges (11) verläuft.

8. Fahrzeugluftreifen nach einem der Ansprüche 1 bis 7, **dadurch gekennzeichnet, dass** die größte Höhe (hₘₐₓ) des Vorsprunges (11) bis zu 75%, insbesondere bis zu 60%, und besonders bevorzugt bis zu 50% der Profiltiefe (T₁) beträgt.

9. Fahrzeugluftreifen nach einem der Ansprüche 1 bis 8, **dadurch gekennzeichnet, dass** der Vorsprung (11) nasenförmig ausgebildet ist.

10. Fahrzeugluftreifen nach einem der Ansprüche 1 bis 9, **dadurch gekennzeichnet, dass** der Vorsprung (11), in Draufsicht betrachtet, in Richtung der Symmetrieebene (E₁) langgestreckt ist.

11. Fahrzeugluftreifen nach Anspruch 10, **dadurch gekennzeichnet, dass** der Vorsprung (11), ermittelt senkrecht zur Symmetrieebene (E₁), eine maximale Breite (bₘₐₓ) von 80% bis 120%, insbesondere von 90% bis 105%, seiner in Draufsicht in der Symmetrieebene (E₁) ermittelten Länge (l₁) aufweist.

12. Fahrzeugluftreifen nach Anspruch 10 oder 11, **dadurch gekennzeichnet, dass** der Vorsprung (11), eine in Draufsicht parallel zu seiner Symmetrieebene (E₁) ermittelte maximale Länge (l₁ₘₐₓ) aufweist, welche 170% bis 240%, insbesondere von 195% bis 215%, seiner in Draufsicht in der Symmetrieebene (E₁) ermittelten Länge (l₁) beträgt.

13. Fahrzeugluftreifen nach einem der Ansprüche 10 bis 12, **dadurch gekennzeichnet, dass** der Vorsprung (11), ermittelt in seiner Symmetrieebene (E₁), eine Länge (l₁) von 1,5 mm bis 5,0 mm, insbesondere von bis zu 3,0 mm, aufweist.

14. Fahrzeugluftreifen nach einem der Ansprüche 10 bis 13, **dadurch gekennzeichnet, dass** der Vorsprung (11), ermittelt in seiner Symmetrieebene (E₁), eine Länge (l₁) aufweist, welche derart gewählt ist, dass der Vorsprung (11) in der Symmetrieebene (E₁) zum Schnittpunkt der Mittellinie (m_{UR}) der Umfangsrille (2) mit der Mittellinie (m_{UR}) der am zugehörigen spitzwinkligen Eckbereich (9) einmündenden Rille (3) einen Abstand (a₁) von 1,0 mm bis 4,0mm, insbesondere von mindestens 2,0 mm, aufweist.

15. Fahrzeugluftreifen mit einem laufrichtungsgebunden ausgeführten Laufstreifen mit zumindest einer insbesondere zentralen Umfangsrille (2), an welcher die Profilpositive (8) die spitzwinkeligen Eckbereiche (9) mit den Vorsprüngen (11) aufweisen, wobei die Profilpositive (8) beim Abrollen des Reifens bei Vorwärtsfahrt über ihre spitzwinkeligen Eckbereiche (9) mit den Vorsprüngen (11) in den Untergrund eintreten, nach einem der Ansprüche 1 bis 14.

## Claims

1. Pneumatic vehicle tyre with a tread (1), which has profile positives (6, 7, 8), which are formed by at least one circumferential groove (2) and grooves (3) merging into the latter, which in each case have a groove base (2a, 3a) and groove flanks (2b, 3b), the profile positives being provided with acute-angled corner regions (9) at which the circumferential groove (2) and the merging-in grooves (3) form an angle (α) with one another of 20° to 45° and which in each case have running around them in the manner of a bow fender a projection (11), which is arranged on the groove bases (2a, 3a) and the greatest height (hₘₐₓ) of which, determined in the radial direction, is 30% to 100% of the profile depth (T₁),
**characterized in that**
the projection (11) has a plane of symmetry (E₁), which runs in the radial direction and bisects the angle (α) between the circumferential groove (2) and the merging-in groove (3), wherein the projection (11) has its greatest height (hₘₐₓ) at the line of intersection (I) of the plane of symmetry (E₁) with the acute-angled corner region (9) and is delimited by a single, continuously curved surface (11a), which descends from the point of the greatest height (hₘₐₓ) in the direction of the groove bases (2a, 3a), wherein at the acute-angled corner region (9) there is formed a triangular corner bevel (12), which extends from the periphery of the tread, reaches as far as the projection (11) and runs at a constant angle (γ) of 20° to 45° to the radial direction.

2. Pneumatic vehicle tyre according to Claim 1, **characterized in that** the rounded surface (11a) which delimits the projection (11) goes over into the groove flanks (2b, 3b) of the circumferential groove (2) and the merging-in groove (3) without any kinks.

3. Pneumatic vehicle tyre according to Claim 1 or 2, **characterized in that**, when viewed in the plane of symmetry (E₁) of the projection (11), the rounded surface (11a) which delimits the projection (11) runs out at the groove base (2b, 3b) of the grooves (2, 3) without any kinks.

4. Pneumatic vehicle tyre according to one of Claims 1 to 3, **characterized in that** the rounded surface (11a) which delimits the projection (11) is continuously curved inwards in the plane of symmetry (E₁) of the projection (11).

5. Pneumatic vehicle tyre according to one of Claims 1 to 4, **characterized in that** a straight line (l') which in the plane of symmetry (E₁) joins the point of the greatest height (hₘₐₓ) to the end of the protection (11) at the groove base (2a, 3a) runs at an angle (β) of 20° to 45°, in particular of 25° to 35°, to the radial direction.

6. Pneumatic vehicle tyre according to one of Claims 1 to 5, **characterized in that** the constant angle (γ) at which the triangular corner bevel (12) runs in relation to the radial direction is up to 40°, preferably from 25° to 35°.

7. Pneumatic vehicle tyre according to one of Claims 1 to 6, **characterized in that** the corner bevel (12) has at the periphery of the tread a straight edge (12a) which, when viewed in plan view, runs perpendicularly to the plane of symmetry (E₁) of the projection (11).

8. Pneumatic vehicle tyre according to one of Claims 1 to 7, **characterized in that** the greatest height (hₘₐₓ) of the projection (11) is up to 75%, in particular up to 60%, particularly preferably up to 50%, of the profile depth (T₁).

9. Pneumatic vehicle tyre according to one of Claims 1 to 8, **characterized in that** the projection (11) is of a nose-shaped form.

10. Pneumatic vehicle tyre according to one of Claims 1 to 9, **characterized in that**, when viewed in plan view, the projection (11) is elongated in the direction of the plane of symmetry (E₁).

11. Pneumatic vehicle tyre according to Claim 10, **characterized in that**, determined perpendicularly in relation to the plane of symmetry (E₁), the projection (11) has a maximum width (bₘₐₓ) of 80% to 120%, in particular of 90% to 105%, of its length (l₁) determined in plan view of the plane of symmetry (E₁).

12. Pneumatic vehicle tyre according to Claim 10 or 11, **characterized in that** the projection (11) has a maximum length (l₁ₘₐₓ), determined in plan view parallel to its plane of symmetry (E₁), which is 170% to 240%, in particular from 195% to 215%, of its length (l₁) determined in plan view of the plane of symmetry (E₁).

13. Pneumatic vehicle tyre according to one of Claims 10 to 12, **characterized in that** the projection (11) has, determined in its plane of symmetry (E₁), a length (l₁) of 1.5 mm to 5.0 mm, in particular of up to 3.0 mm.

14. Pneumatic vehicle tyre according to one of Claims 10 to 13, **characterized in that** the projection (11) has, determined in its plane of symmetry (E₁), a length (l₁) which is chosen such that the projection (11) has in the plane of symmetry (E₁) in relation to the point of intersection of the centre line (m_{UR}) of the circumferential groove (2) with the centre line (m_{UR}) of the groove (3) merging in at the associated acute-angled corner region (9), a distance (a₁) of 1.0 mm to 4.0 mm, in particular of at least 2.0 mm.

15. Pneumatic vehicle tyre with a directional tread with at least one, in particular central, circumferential groove (2), at which the profile positives (8) have the acute-angled corner regions (9) with the projections (11), wherein, when the tyre is rolling during forward travel, the profile positives (8) arrive at ground level by way of their acute-angled corner regions (9) with the projections (11), according to one of Claims 1 to 14.

## Revendications

1. Pneumatique de véhicule avec une bande de roulement (1), qui présente des éléments positifs de profil (6, 7, 8) formés par au moins une rainure circonférentielle (2) et des rainures (3) débouchant dans celle-ci, qui présentent chacune un fond de rainure (2a, 3a) et des flancs de rainure (2b, 3b), lesquels sont pourvus de zones de coin à angle aigu (9), au niveau desquelles la rainure circonférentielle (2) et les rainures débouchantes (3) forment entre elles un angle (α) de 20° à 45° et qui sont respectivement entourées à la manière d'un pare-battage par une protubérance (11) agencée sur les fonds de rainure (2a, 3a), dont la hauteur maximale (hₘₐₓ) déterminée dans la direction radiale représente 30 % à 100 % de la profondeur de profil (T₁),
**caractérisé en ce que**
la protubérance (11) présente un plan de symétrie (E₁) s'étendant dans la direction radiale, qui divise par deux l'angle (α) entre la rainure circonférentielle (2) et la rainure débouchante (3), la protubérance (11) possédant sa hauteur maximale (hₘₐₓ) au niveau de la ligne d'intersection (I) du plan de symétrie (E₁) avec la zone de coin à angle aigu (9) et étant délimitée par une seule surface incurvée de manière continue (11a), qui, à partir de l'emplacement présentant la hauteur maximale (hₘₐₓ), descend en direction des fonds de rainure (2a, 3a), un chanfrein de coin triangulaire (12) partant de la périphérie de la bande de roulement étant formé au niveau de la zone de coin à angle aigu (9), lequel atteint la protubérance (11) et s'étend par rapport à la direction radiale selon un angle (γ) constant de 20° à 45°.

2. Pneumatique de véhicule selon la revendication 1, **caractérisé en ce que** la surface arrondie (11a) qui délimite la protubérance (11) se poursuit sans inflexion par les flancs de rainure (2b, 3b) de la rainure circonférentielle (2) et de la rainure débouchante (3).

3. Pneumatique de véhicule selon la revendication 1 ou 2, **caractérisé en ce que** la surface arrondie (11a) qui délimite la protubérance (11), vue dans le plan de symétrie (E₁) de la protubérance (11), se termine sans inflexion au niveau du fond de rainure (2b, 3b) des rainures (2, 3).

4. Pneumatique de véhicule selon l'une quelconque des revendications 1 à 3, **caractérisé en ce que** la surface arrondie (11a) qui délimite la protubérance (11) est bombée vers l'intérieur de manière continue dans le plan de symétrie (E₁) de la protubérance (11).

5. Pneumatique de véhicule selon l'une quelconque des revendications 1 à 4, **caractérisé en ce qu'**une ligne droite (l') qui relie, dans le plan de symétrie (E₁), l'emplacement présentant la hauteur maximale (hₘₐₓ) à l'extrémité de la protubérance (11) au niveau du fond de rainure (2a, 3a), s'étend par rapport à la direction radiale selon un angle (β) de 20° à 45°, notamment de 25° à 35°.

6. Pneumatique de véhicule selon l'une quelconque des revendications 1 à 5, **caractérisé en ce que** l'angle (γ) constant selon lequel le chanfrein de coin triangulaire (12) s'étend par rapport à la direction radiale est de jusqu'à 40°, de préférence de 25° à 35°.

7. Pneumatique de véhicule selon l'une quelconque des revendications 1 à 6, **caractérisé en ce que** le chanfrein de coin (12) présente au niveau de la périphérie de la bande de roulement une arête droite (12a) qui, en vue de dessus, s'étend perpendiculairement au plan de symétrie (E₁) de la protubérance (11).

8. Pneumatique de véhicule selon l'une quelconque des revendications 1 à 7, **caractérisé en ce que** la hauteur maximale (hₘₐₓ) de la protubérance (11) représente jusqu'à 75 %, notamment jusqu'à 60 %, et de manière particulièrement préférée jusqu'à 50 % de la profondeur de profil (T₁).

9. Pneumatique de véhicule selon l'une quelconque des revendications 1 à 8, **caractérisé en ce que** la protubérance (11) est configurée en forme d'ergot.

10. Pneumatique de véhicule selon l'une quelconque des revendications 1 à 9, **caractérisé en ce que** la protubérance (11), en vue de dessus, est allongée en direction du plan de symétrie (E₁).

11. Pneumatique de véhicule selon la revendication 10, **caractérisé en ce que** la protubérance (11), déterminée perpendiculairement au plan de symétrie (E₁), présente une largeur maximale (bₘₐₓ) de 80 % à 120 %, notamment de 90 % à 105 %, de sa longueur (l₁) déterminée en vue de dessus dans le plan de symétrie (E₁).

12. Pneumatique de véhicule selon la revendication 10 ou 11, **caractérisé en ce que** la protubérance (11) présente une longueur maximale (l₁ₘₐₓ) déterminée en vue de dessus parallèlement à son plan de symétrie (E₁), qui représente 170 % à 240 %, notamment 195 % à 215 %, de sa longueur (l₁) déterminée en vue de dessus dans le plan de symétrie (E₁).

13. Pneumatique de véhicule selon l'une quelconque des revendications 10 à 12, **caractérisé en ce que** la protubérance (11), déterminée dans son plan de symétrie (E₁), présente une longueur (l₁) de 1,5 mm à 5,0 mm, notamment de jusqu'à 3,0 mm.

14. Pneumatique de véhicule selon l'une quelconque des revendications 10 à 13, **caractérisé en ce que** la protubérance (11), déterminée dans son plan de symétrie (E₁), présente une longueur (l₁) qui est choisie de telle sorte que la protubérance (11) présente dans le plan de symétrie (E₁) une distance (a₁) de 1,0 mm à 4,0 mm, notamment d'au moins 2,0 mm, par rapport au point d'intersection de la ligne médiane (m_{UR}) de la rainure circonférentielle (2) avec la ligne médiane (m_{UR}) de la rainure (3) débouchant au niveau de la zone de coin à angle aigu (9) correspondante.

15. Pneumatique de véhicule avec une bande de roulement réalisée sous forme directionnelle avec au moins une rainure circonférentielle (2), notamment centrale, sur laquelle les éléments positifs de profil (8) présentent les zones de coin à angle aigu (9) avec les protubérances (11), les éléments positifs de profil (8) entrant dans le sol par leurs zones de coin à angle aigu (9) avec les protubérances (11) lors du roulement du pneumatique en marche avant, selon l'une quelconque des revendications 1 à 14.
